# EUROPEAN PATENT APPLICATION

(11) **EP 3 479 949 A1**
(43) Date of publication of application: **08.05.2019**
(21) Application number: 17861728.8
(22) Date of filing: 16.10.2017
(51) Int. Cl.: B23K 31/00, B23K 26/342, F16H 25/24, B23K 9/04

(54) **BUILD-UP DEVICE, METHOD OF MANUFACTURING SCREW SHAFT, SCREW SHAFT, AND SCREW DEVICE**

(30) Priority: 17.10.2016 JP 2016203292; 17.10.2016 JP 2016203293
(71) Applicant: NSK Ltd., Tokyo 141-8560 (JP)
(72) Inventor: KOIKE Etsuo, Fujisawa-shi Kanagawa 251-8501 (JP); FUJISHIRO Hiroaki, Fujisawa-shi Kanagawa 251-8501 (JP)
(74) Representative: Grünecker Patent- und Rechtsanwälte PartG mbB
(86) International application number: PCT/JP2017/037301
(87) International publication number: WO 2018/074391

(57) **Abstract**

A cladding device includes a heating head which includes a heating source for heating a part to be processed of a workpiece and a fixing material and which is configured to cause the fixing material melted by the heating source to adhere to the part to be processed of the workpiece. The cladding device is configured to bring a cooling fluid into contact with a temperature-rise suppressed part adjacent to the part to be processed of the workpiece.

## Description

### TECHNICAL FIELD

The present invention relates to a cladding device, a method of manufacturing a screw shaft, a screw shaft, and a screw device.

### RELATED ART

In general, when performing a welding operation in the air, a welded part is naturally cooled by the surrounding air. Therefore, a specific part of a workpiece is hardly actively cooled during the welding operation. In the meantime, a temperature rise due to the welding may badly influence a material of the workpiece, depending on welding targets. In this case, a cooling method of injecting any gas or liquid, as a cooling agent, to the specific part of the workpiece during the welding operation may be adopted. For example, a friction stirring joining device disclosed in Patent Document 1 is configured to inject a cooling agent to a part of a workpiece so as to avoid a temperature rise at the corresponding part. Also, a hollow cam shaft manufacturing device disclosed in Patent Document 2 adopts a cooling method of using a shape of a workpiece, and is configured to supply a cooling liquid to a hollow inside of a hollow workpiece. Also, according to an engine valve manufacturing method disclosed in Patent Document 3, a large-diameter part is formed at a part of a shaft member by laser cladding and a water path in a workpiece receiving table, on which the shaft member is to be placed, is provided for cooling.

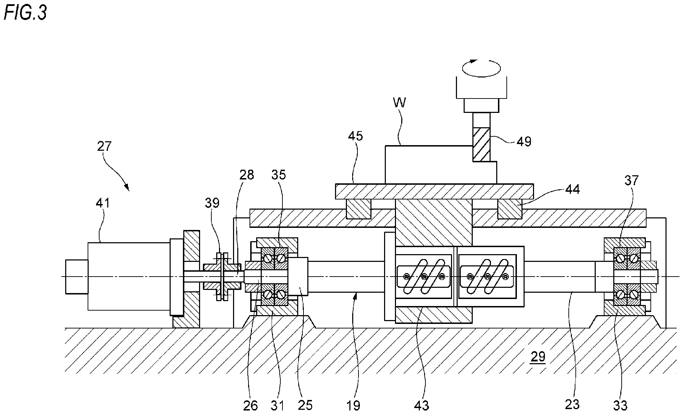

Here, a ball screw, which is an example of the workpiece, is referred. The ball screw is used for feed movement, power transmission, positioning and the like of diverse working machines. As shown in FIG. 3, a ball screw shaft 19 of the ball screw is supported to support brackets 31, 33 of which both end portions are placed on a base 29, via a pair of support bearings 35, 37. One end portion of the ball screw shaft 19 is coaxially coupled to a drive shaft of a servo motor 41 via a coupling 39. A nut 43 is arranged around a ball screw part 23 of the ball screw shaft 19 so as to be axially moveable via a plurality of balls. The nut 43 is fixed to a workpiece table 45 that is guided to be horizontally moveable by a table guide part 44. The ball screw shaft 19 is rotated by the servo motor 41, so that the workpiece table 45 moves horizontally together with the nut 43 and a workpiece W on the workpiece table 45 is subjected to desired processing by a tool 49.

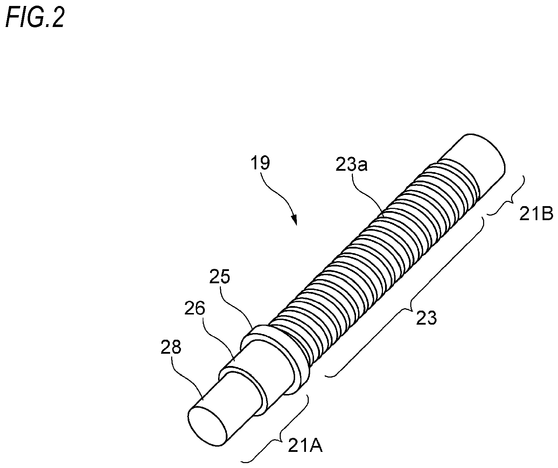

As shown in FIG. 2, the ball screw shaft 19 has a ball screw part 23 having ball rolling grooves 23a formed thereon, on which a ball (not shown) is to roll, a bearing support part 26 to which support bearings 113, 114 are to be externally fitted at an end portion of the ball screw shaft 19, an extension part 28 further extending axially from the bearing support part 26, and a flange part 25 provided between the ball screw part 23 and the bearing support part 26.

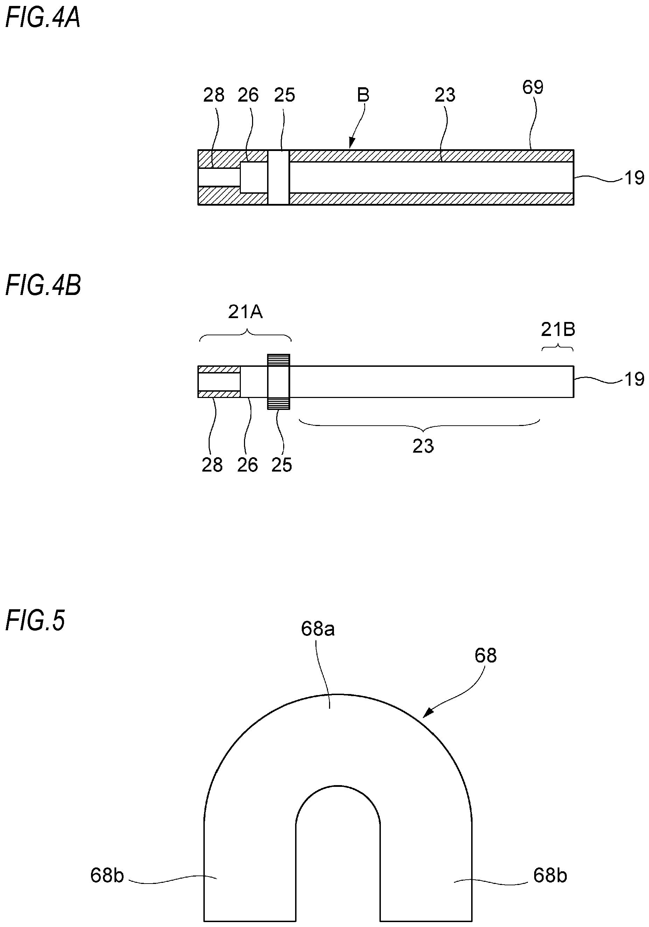

As shown in FIG. 4A, in the related art, the ball screw shaft 19 is manufactured through a removing process of cutting and grinding an unnecessary part 69 from a material B having an outer diameter capable of cutting a product shape. In the meantime, the ball screw part 23 of FIG. 4A is subjected to further processing for forming the ball rolling grooves.

Also, as a manufacturing method of the shaft member, a circumferential cladding layer is axially aligned to clad a friction material on a conical surface of an iron base ring of a conical clutch by a laser cladding method (for example, refer to Patent Document 4) or a wear resistant material is cladded on a cam slide surface of a cam shaft by laser (for example, refer to Patent Document 5).

### Citation List

### Patent Documents

Patent Document 1: JP-A-2004-148350
Patent Document 2: JP-A-H11-336512
Patent Document 3: JP-A-H08-121125
Patent Document 4: JP-A-2002-372070
Patent Document 5: JP-A-2000-192805

### SUMMARY OF THE INVENTION

### Problems To Be Solved By the Invention

However, the workpiece processing methods of Patent Documents 1 to 3 have following problems. First, the friction stirring joining device disclosed in Patent Document 1 is configured to cool the welded part while welding the workpiece. However, there is no cooling jacket for spacing the welded part and a cooled part. For this reason, when the cooling agent is sprayed to the welded part and the welded part is thus cooled during the welding operation, weld penetration is insufficient or a welding defect occurs, so that strength of the welded part may be lowered.

Also, the hollow cam shaft manufacturing device disclosed in Patent Document 2 is configured to form the large-diameter part at a part of the shaft member by the laser cladding. However, the workpiece is a hollow member and the cooling liquid is supplied into the hollow inside. For this reason, the method cannot be used when the workpiece is a solid member.

According to the engine valve manufacturing method disclosed in Patent Document 3, the large-diameter part is formed at a part of the shaft member by the laser cladding. However, since the indirect cooling is performed, it is not possible to sufficiently cool a temperature-rise suppressed part.

Like this, when the cooling agent is introduced to the welded part or the temperature-rise suppressed part is not sufficiently cooled, the workpiece is likely to be altered due to the heat, so that it is difficult to manufacture a metal component having a complex shape or a metal component for which it is intended to secure mechanical properties.

Also, regarding the ball screw, a ball screw capable of withstanding high thrust force has been recently developed, so that a press machine and the like are changed from hydraulic drive to electric actuation having combined the ball screw and the servo motor. In order to increase a load capacity of the ball screw, the nut may be lengthened to increase the number of balls. However, a size of the support bearing for supporting the ball screw should be increased so as to cope with the large thrust force. For this reason, as shown in FIG. 3, a situation where an outer diameter dimension of the ball screw part 23 is smaller than inner diameter dimensions of the support bearings 35, 37 may occur. In this case, the removing processing is performed from a material having a size capable of sufficiently processing the bearing support part 26 by the cutting processing and the grinding processing.

Also, since the support bearing is applied with the high thrust force, it may be necessary to provide the ball screw with a large flange. In FIG. 4A, the removing processing is performed from a material B with which it is possible to process the flange part 25 having an outer diameter dimension larger than the bearing support part 26.

When the screw shaft 19 has the bearing support part 26 having an outer diameter dimension larger than an outer diameter dimension of the ball screw part 23, the material B from which it is possible to sufficiently cut the bearing support part 26 is removed into a predetermined shape. Therefore, the yield of the material is poor and much time is consumed for the processing.

The present invention has been made in view of the above situations, and a first object thereof is to provide a cladding device capable of manufacturing a metal component having a complex shape while suppressing alteration of a workpiece.

Also, a second object of the present invention is to provide an inexpensive screw shaft of which yield of a material is favorable and processing time can be shortened, a manufacturing method of the screw shaft, and a screw device.

### Means for Solving the Problems

The present invention is configured as follows.
(1) A cladding device including:
   a heating head including a heating source for heating a part to be processed of a workpiece and a fixing material and configured to cause the fixing material melted by the heating source to adhere to the part to be processed of the workpiece and to build up the workpiece,
   wherein the cladding device is configured to bring a cooling fluid into contact with a temperature-rise suppressed part adjacent to the part to be processed of the workpiece.

   According to the cladding device, the fixing material melted by the heating head adheres to the heated part to be processed, so that the workpiece is cladded. Also, the temperature-rise suppressed part of the workpiece is cooled by the cooling fluid, so that the temperature rise to a predetermined temperature or higher, at which thermal alteration is caused, is suppressed.
(2) The cladding device of the above (1), further including:
   a cooling jacket configured to inject the cooling fluid toward the workpiece, and
   a shield member provided at a boundary between the part to be processed of the workpiece and the temperature-rise suppressed part and configured to shield introduction of the cooling fluid from the temperature-rise suppressed part to the part to be processed.

   According to the cladding device, the temperature-rise suppressed part of the workpiece adjacent to the part to be processed is injected with the cooling fluid and is thus cooled, so that the temperature rise to the predetermined temperature or higher, at which the thermal alteration is caused, is suppressed. The cooling fluid is inhibited from being introduced to the part to be processed by the shield plate provided at the boundary between the part to be processed and the temperature-rise suppressed part. That is, the shield plate can reduce loss of a heat input for heating of the part to be processed by the heating head, thereby suppressing the temperature rise of the temperature-rise suppressed part as a result of heat transfer from the part to be processed.
(3) The cladding device of the above (1), wherein the temperature-rise suppressed part of the workpiece is immersed in the cooling fluid.
   According to the cladding device, the temperature-rise suppressed part is immersed in the cooling fluid, so that the temperature rise to the predetermined temperature or higher, at which the thermal alteration is caused, is simply suppressed.
(4) The cladding device of the above (2), further including a relative movement mechanism configured to relatively move the workpiece and the heating head.
   According to the cladding device,
(5) The cladding device of the above (4), wherein the relative movement mechanism includes a workpiece rotation driving mechanism configured to rotate the workpiece.
   According to the cladding device, it is possible to perform the uniform cladding in a circumferential direction by cladding the workpiece while rotating the workpiece.
(6) The cladding device of the above (4), wherein the relative movement mechanism is configured to relatively move the workpiece and the heating head by linear movement.
   According to the cladding device, it is possible to simply perform the cladding at any position of the workpiece by cladding the workpiece while relatively linearly move the workpiece and the heating head.
(7) The cladding device of one of the above (1) to (6), wherein the heating source is a laser illumination unit.
   According to the cladding device, the laser illumination unit is provided, so that it is possible to perform laser cladding processing. The laser cladding processing has the less heat input to the workpiece, as compared to the other welding processing. The workpiece has a part to which the heat input is not permitted, because of precision lowering, which is caused due to expansion and contraction of the workpiece as a result of the thermal influence, lifetime reduction due to hardness lowering, and the like. However, according to the cladding device, it is possible to easily suppress the temperature rise at any place. Thereby, it is possible to accomplish both the cladding of an insufficient thickness part and the function guarantee of the workpiece.
(8) The cladding device of the above (2), wherein the shield member is capable of moving relative to the workpiece and includes an opening part which the workpiece is freely inserted in and removed from.
   According to the cladding device, it is possible to easily change the part to be processed of the workpiece and to easily mount and demount the shield member.
(9) The cladding device of the above (2), wherein the shield member is an annular collar that is to be mounted to an outer periphery of the workpiece and protrudes in a radially outward direction of the workpiece.
   According to the cladding device, the injected cooling fluid is securely inhibited from being introduced to the part to be processed by the shield member, which is an annular collar.
(10) The cladding device of the above (4), wherein the shield member is a wall configured to surround the part to be processed of the workpiece, and
   wherein the relative movement mechanism includes a workpiece moving mechanism configured to relatively move the heating head and the part to be processed along the workpiece.
   According to the cladding device, the part to be processed of the workpiece is surrounded by the shield member, so that it is possible to prevent the temperature rise at a part except the part to be processed. Thereby, it is possible to accomplish both the cladding of an insufficient thickness part and the function guarantee of the workpiece.
(11) The cladding device of the above (4), wherein the shield member is an annular wall configured to surround the part to be processed of the plate-shaped workpiece, and
   wherein the relative movement mechanism includes a workpiece moving mechanism configured to relatively move the heating head and the part to be processed along a plate surface of the workpiece.
   According to the cladding device, the part to be processed of the plate-shaped workpiece can be surrounded by the shield member consisting of the annular wall. Thereby, that it is possible to prevent the temperature rise at a part except the part to be processed, and to accomplish both the cladding of an insufficient thickness part to be arranged on the same plane and the function guarantee of the workpiece as a result of suppressing the thermal influence.
(12) A method of manufacturing a screw shaft having a diameter-expanded part larger than an outer diameter dimension of a ball screw part,
   wherein the diameter-expanded part is formed by cladding.
   According to the method of manufacturing a screw shaft, it is possible to reduce a material cost and to shorten processing time, so that it is possible to manufacture a screw shaft at low cost, as compared to a method of performing cutting work and grinding work.
(13) The method of manufacturing a screw shaft of the above (12), wherein the diameter-expanded part is formed by laser cladding.
   According to the method of manufacturing a screw shaft, it is possible to reduce a heat input to a workpiece, as compared to the other welding processing, so that it is possible to suppress lowering in precision and hardness due to a thermal influence.
(14) The method of manufacturing a screw shaft of the above (13), wherein the cladding by the laser cladding is performed in a state where at least a screw part adjacent to a cladding part or a part becoming the screw part is cooled.
   According to the method of manufacturing a screw shaft, the thermal influence due to the laser cladding is reduced, so that it is possible to secure the precision and hardness of the screw part.
(15) The method of manufacturing a screw shaft of one of the above (12) to (14), wherein the diameter-expanded part includes at least a flange part or a bearing support part.
   According to the method of manufacturing a screw shaft, it is possible to expand diameters of the flange part and the bearing support part by the cladding.
(16) A method of manufacturing a screw shaft having a screw part,
   wherein the screw part is formed by cladding a nickel-based alloy around an iron-based material by laser cladding.
   According to the method of manufacturing a screw shaft, it is possible to improve a corrosion resistance of the screw part.

A manufacturing method of a machine using the method of manufacturing a screw shaft of one of the above (12) to (16).

According to the manufacturing method of a machine, it is possible to manufacture a high-quality machine at low cost.

A manufacturing method of a vehicle using the method of manufacturing a screw shaft of one of the above (12) to (16).

According to the manufacturing method of a vehicle, it is possible to manufacture a high-quality vehicle at low cost.
(19) A screw shaft having a diameter-expanded part larger than an outer diameter dimension of a screw part,
   wherein a surface of the diameter-expanded part is formed of a material different from a material of the screw part.
   According to the screw shaft, it is possible to configure only a required part by an expensive material having high specific strength.
(20) A screw shaft having a diameter-expanded part larger than an outer diameter dimension of a screw part,
   wherein at least a surface of the diameter-expanded part which is cladded is formed of a material different from a material of the screw part.
   According to the screw shaft, since at least the surface of the diameter-expanded part is formed of a material different from a material of the screw part, it is possible to efficiently improve the high hardness, the corrosion resistance, the wear resistance and the like.
(21) The screw shaft of the above (19) or (20), wherein the diameter-expanded part includes at least a flange part or a bearing support part.
   According to the screw shaft, it is possible to configure the flange part or the bearing support part having high hardness and excellent corrosion resistance and wear resistance.
(22) A screw device including the screw shaft of the above (19) or (20).
   According to the screw device, since the inexpensive screw shaft of which yield of a material is favorable and processing time can be shortened is used, it is possible to configure the high-quality screw device at low cost.
(23) A machine including the screw shaft of one of the above (19) to (21).
   According to the machine, it is possible to configure the high-quality machine at low cost.
(24) A vehicle including the screw shaft of one of the above (19) to (21).
   According to the vehicle, it is possible to configure the high-quality vehicle at low cost.

### Effects of the Invention

According to the cladding device of the present invention, an influence of the temperature rise associated with the cladding is limited to the part to be processed, so that it is possible to suppress alteration of the workpiece due to the heat. As a result, it is possible to manufacture a metal component having a complex shape while keeping the strength and other mechanical properties of the workpiece.

According to the method of manufacturing a screw shaft of the present invention, the screw shaft has the diameter-expanded part larger than the outer diameter dimension of the screw part, and the material of a predetermined outer diameter dimension necessary to process the outer diameter dimension of the screw part is subjected to the cladding processing by an insufficient amount of the outer diameter dimension of the diameter-expanded part, considering a processable machining allowance. Thereby, it is possible to provide the inexpensive screw shaft by saving the material cost and shortening the processing time.

Also, according to the screw shaft of the present invention, since the surface of the diameter-expanded part larger than the outer diameter dimension of the screw part is made of the material different from the material of the screw part, it is possible to provide the screw shaft having the diameter-expanded part having improved the high hardness, the corrosion resistance, the wear resistance and the like.

Also, according to the screw device of the present invention, since the inexpensive screw shaft of which yield of a material is favorable and processing time can be shortened is used, it is possible to configure the high-quality screw device at low cost.

### BRIEF DESCRIPTION OF THE DRAWINGS

FIG.1 is an entire configuration view of a cladding device of a first embodiment.
FIG. 2 is a pictorial perspective view of a ball screw shaft, which is an example of a workpiece.
FIG. 3 is a configuration view depicting an example of a feed driving mechanism having the ball screw shaft of FIG. 2 mounted thereto.
FIG. 4A is a side view depicting a ball screw shaft of a comparative example, together with an unnecessary part, and FIG. 4B is a side view depicting the ball screw shaft obtained by a cladding device of the first embodiment, together with a cladding part.
FIG. 5 is a front view of a shield plate of a modified embodiment.
FIG. 6 is a configuration view of main parts of a cladding device in which the shield plate of FIG. 5 is used.
FIG. 7 is a pictorial configuration view of a cladding device of a second embodiment.
FIG. 8 is a pictorial configuration view of a cladding device of a third embodiment.
FIG. 9 illustrates a cladding part of a ball screw shaft of a fourth embodiment.

### DETAILED DESCRIPTION OF EMBODIMENTS

Hereinafter, embodiments of the present invention will be described in detail with reference to the drawings.

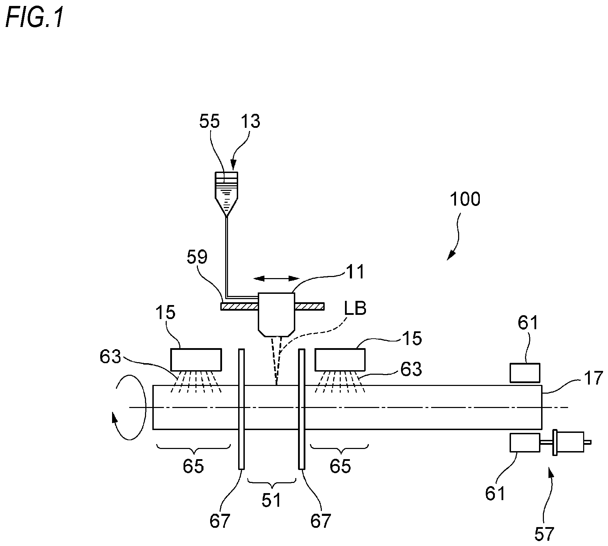

FIG.1 is an entire configuration view of a cladding device of a first embodiment.

A cladding device 100 of the first embodiment is a device configured to implement laser cladding processing for a workpiece, and includes a heating head 11, a fixing material supply unit 13, a relative movement mechanism (which will be described later), cooling jackets 15, and shield plates 67, which are shield members to be mounted to an outer periphery of a workpiece 17. The laser cladding processing that is to be implemented by the cladding device 100 can be applied to a high-precision member such as a ball screw shaft 19, too.

FIG. 2 is a pictorial perspective view of a ball screw shaft 19, which is an example of the workpiece 17, and FIG. 3 is a configuration view depicting an example of a feed driving mechanism having the ball screw shaft of FIG. 2 mounted thereto.

The ball screw shaft 19 has bearing parts 21A, 21B and a ball screw part 23, and a flange part 25 having a large diameter protrudes radially outward between the bearing part 21A and the ball screw part 23. The ball screw shaft 19 is used for a feed driving device 27 shown in FIG. 3, for example.

The cladding device 100 shown in FIG. 1 is a device capable of implementing cladding for the ball screw shaft 19, which is to be mounted to the feed driving mechanism as described above, by the laser cladding.

In the below, a configuration of the cladding device 100 is described in detail.

The heating head 11 includes a laser illumination unit, which is a heating source. The laser illumination unit may include a laser light source embedded therein or may be configured to guide light to a light output unit through a fiber bundle or the like, from a laser light source arranged separately from the heating head 11. The laser illumination unit is configured to heat the workpiece 17 by laser illumination and is also configured to heat a fixing material 55, which is to be injected from the heating head 11 toward the workpiece 17, by the laser illumination. As the laser light source, a laser oscillator such as YAG laser, semiconductor laser and the like may be used, for example.

The fixing material supply unit 13 is configured to supply the fixing material 55 to the heating head 11, and to inject the fixing material 55 toward a part 51 to be processed to be cladded from the heating head 11. The injected fixing material 55 enters an illumination path of a laser light LB immediately before reaching a surface of the workpiece 17, and is melted by heating through the laser illumination. The melted fixing material 55 is attached to the part 51 to be processed of the workpiece 17.

As the fixing material 55, metal powders including the same or different metal as or from the workpiece 17 can be used. However, a foil material or a wire material can also be used.

The relative movement mechanism is configured to relatively move the workpiece 17 and the heating head 11. The relative movement mechanism of the first embodiment includes a workpiece rotation driving mechanism 57 configured to rotate the workpiece 17 around an axis of the workpiece, and a feed mechanism 59 configured to move the heating head 11 along the axis of the workpiece 17. The workpiece 17 is supported by a chuck or the like (not shown) and is rotatively driven via rollers 61 by a rotation driving unit such as a servo motor. In addition to this, the workpiece 17 may be directly rotatively driven by a rotation driving unit arranged coaxially with the workpiece 17 or the workpiece 17 and the heating head 11 may be relatively moved by linear movement.

The cooling jacket 15 is configured to inject a cooling fluid 63 from cooling nozzles arranged at a lower side of the jacket. The injected cooling fluid 63 is sprayed to a temperature-rise suppressed part 65 adjacent to the part 51 to be processed of the workpiece 17, thereby cooling the temperature-rise suppressed part 65. As the cooling fluid 63, water having high latent heat is favorably used. Also, as the cooling fluid 63, the air may be used, in addition to the water. In the above configuration, the cooling jackets 15 are arranged at both axial sides of the part 51 to be processed. However, the cooling jacket may be arranged only at one side, depending on conditions such as a short distance to a shaft end portion. Also, when an influence of temperature rise can be ignored, depending on required functions of a product, the cooling is not necessary.

The shield plate 67 is mounted to a boundary between the part 51 to be processed of the workpiece 17 and the temperature-rise suppressed part 65. In the first embodiment, the shield plate 67 is an annular collar that is mounted to an outer periphery of the workpiece 17 with protruding in a radially outward direction of the workpiece 17.

The shield plate 67 has a radial width set so that droplets of the cooling fluid 63 injected from the cooling jacket 15 are not to flow to the part 51 to be processed. The shield plate 67 is preferably made of a material having high heat resistance and thermal insulation properties, and is to prevent heat leakage from the part 51 to be processed toward the temperature-rise suppressed part 65.

Also, the shield plate 67 may be fixed to the workpiece 17 by a fixing jig (not shown) or by interference fit. The pair of shield plates 67 is mounted to both axial sides of the part 51 to be processed, thereby inhibiting the cooling fluid 63 from being introduced from the temperature-rise suppressed parts 65 to the part 51 to be processed. Also, since the shield plate 67 is arranged over an entire circumference of the outer peripheral surface of the workpiece 17, the shield plate securely inhibits the cooling fluid 63 from being introduced to the part 51 to be processed.

In the meantime, when the cooling jacket 15 is arranged only at one side of the part 51 to be processed, the shield plate 67 is arranged only at one side of the part 51 to be processed facing toward the cooling jacket 15.

Subsequently, a cladding sequence by the cladding device 100 of the first embodiment is described.

The cladding by the cladding device 100 includes a shield plate mounting process, a cladding process, a cooling process, and a finishing process.

In the shield plate mounting process, the shield plates 67, which are annular collars, are mounted to the boundaries with the temperature-rise suppressed parts at both axial sides of the part 51 to be processed for forming the flange part 25 (refer to FIG. 2) of the workpiece 17.

In the cladding process, while rotatively driving the workpiece 17 by the workpiece rotation driving mechanism 57, the workpiece 17 and the heating head 11 are relatively moved in the axis direction by the feed mechanism 59 and the laser light LB is irradiated to the part 51 to be processed of the workpiece 17 from the heating head 11. Thereby, the part 51 to be processed of the workpiece 17 and the fixing material 55 injected from the heating head 11 and introduced into the laser illumination region are heated. The melted fixing material 55 is attached to the part 51 to be processed of the workpiece 17, so that the cladding is performed for the part 51 to be processed by the laser cladding.

By the cladding through the laser cladding, the melted fixing material 55 is attached to the part 51 to be processed and a step part corresponding to the flange part 25 is finally formed between the shield plates 67, 67.

Also, although not shown, the cladding device 100 may include a radial driving unit configured to move the heating head 11 in the radially outward direction of the workpiece 17, in correspondence to a thickness increase of the fixing material 55 attached to the part 51 to be processed. In this case, it is possible to make a distance between the heating head 11 and the outer peripheral surface of the part 51 to be processed constant by the radial driving unit, so that it is possible to implement the more uniform laser cladding.

In the cooling process, the cooling fluid 63 is injected from the cooling jacket 15 toward the temperature-rise suppressed part 65 of the workpiece 17 simultaneously with the cladding process, thereby cooling the temperature-rise suppressed part 65. The shield plate 67 mounted to the boundary between the part 51 to be processed of the workpiece 17 and the temperature-rise suppressed part 65 inhibits the cooling fluid 63 from being introduced to the part 51 to be processed. Thereby, the lowering of the heat input to the part 51 to be processed due to the cooling and the alteration of the temperature-rise suppressed part 65 are prevented in advance.

In the meantime, the cooling water may be continuously injected from the cooling jacket 15 until the temperature of the part 51 to be processed is sufficiently lowered, even after the processing is completed. That is, after the laser cladding processing, the cooling fluid 63 may be injected from at least some nozzles of the cooling jacket 15, thereby increasing the cooling rate of the part 51 to be processed.

In the finishing process, after the cladding process and the cooling process, the workpiece 17 is subjected to turning work or grinding work, so that the workpiece 17 is finished to have a predetermined design shape. In the case that the workpiece 17 is a ball screw shaft, the formed part 51 to be processed is finished to be the flange part 25.

Subsequently, effects of the cladding device 100 are described.

In the cladding device 100 of the first embodiment, when the heat is input to the workpiece 17, the fixing material 55 is supplied from the fixing material supply unit 13 to the heating head 11. The heating head 11 injects the supplied fixing material 55 toward the part 51 to be processed. Also, the heating head 11 irradiates the laser light LB toward the part 51 to be processed. When the fixing material 55 injected from the heating head 11 enters the illumination path of the irradiated laser light LB, the fixing material is heated and melted by the laser light LB. The melted fixing material 55 is attached and solidified to the part 51 to be processed of the workpiece 17. In this way, the fixing material 55 is deposited on the part 51 to be processed, so that the cladding thickness increases.

Also, simultaneously with the cladding, the cooling fluid 63 is injected from the cooling nozzles of the cooling jacket 15 to the temperature-rise suppressed part 65 of the workpiece 17 adjacent to the part 51 to be processed. The temperature-rise suppressed part 65 is cooled by the injected cooling fluid 63, so that the temperature rise to a temperature or higher at which the material is to be altered is suppressed. Upon the cooling, the cooling fluid 63 is inhibited from being introduced to the part 51 to be processed by the shield plate 67 provided at the boundary between the part 51 to be processed and the temperature-rise suppressed part 65. That is, the shield plate 67 makes it difficult for the cooling of the temperature-rise suppressed part 65 to influence the part 51 to be processed, thereby decreasing the loss of the heat input to the part 51 to be processed. The shield plate 67 is mounted to the workpiece 17, so that it is possible to reduce the heat transfer from the part 51 to be processed to the temperature-rise suppressed part 65 by the increase in a heat capacity.

In the first embodiment, the heating head 11 includes the laser light source, as the heating source, so that it is possible to implement the laser cladding processing. In the laser cladding processing, the heat input to the workpiece 17 is reduced, as compared to the other welding processing. For this reason, while suppressing the thermal alteration of the workpiece, it is possible to easily perform the local cladding and to improve the degree of processing freedom. Also, since the laser light is used, it is possible to locally input the heat to the part 51 to be processed, so that it is possible to make the cladding on the part 51 to be processed having any pattern with high precision.

The workpiece 17 has a part to which the large heat input is not permitted, because of precision lowering, which is caused due to expansion and contraction of the workpiece 17 as a result of the thermal influence, lifetime reduction due to hardness lowering, and the like. For example, the ball screw shaft 19 has a part to which the large heat input is not permitted, because of lead accuracy lowering, which is caused due to expansion and contraction as a result of the thermal influence, lifetime reduction due to hardness lowering of a ball rolling surface, and the like. Even for such a workpiece 17, according to the cladding device 100, the cooling jacket 15 is provided with the shield plate 67 being interposed between the cooling jacket and the part 51 to be processed, so that it is possible to prevent the temperature rise at a part except the part 51 to be processed and to accomplish both the cladding on an insufficient thickness part and the function guarantee of the ball screw shaft 19.

Here, the cladding by the cladding device 100 and the other processing method are compared.

FIG. 4A is a side view depicting a ball screw shaft of a comparative example, together with an unnecessary part, and FIG. 4B is a side view depicting the ball screw shaft 19 obtained by the cladding device of the first embodiment, together with a cladding part.

When the cladding device 100 of the first embodiment is used, it is not necessary to perform removing processing from a material having a diameter enough to process a bearing part 21A, as shown in FIG. 4A. That is, as shown in FIG. 4B, a material having a smallest diameter with which it is possible to process the ball screw part 23, which is a functional main part of the ball screw shaft 19, is used and a step part corresponding to the flange part 25 may be formed by the cladding processing. For this reason, when the cladding device 100 is used, it is possible to suppress the material cost and to shorten the processing tact.

In the below, a modified embodiment of the cladding device is described.

FIG. 5 is a front view of a shield plate 68 of the modified embodiment.

While the shield plate 67 is an annular collar that is to be mounted to the outer periphery of the workpiece 17, a shield plate 68 shown in FIG. 5 is a U-shaped plate material having a circular arc part 68a conforming to the outer periphery of the workpiece 17 and an opening part 68b which is extending from the circular arc part 68a and which the workpiece 17 is freely inserted in and remove from, as seen from the front.

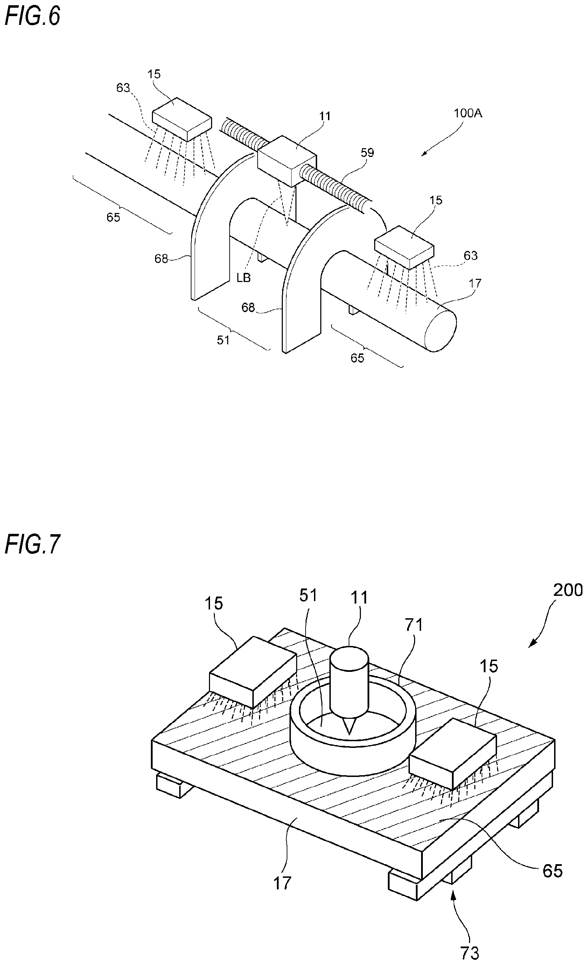

FIG. 6 is a configuration view of main parts of a cladding device 100A in which the shield plate 68 of FIG. 5 is used. A pair of the shield plates 68 is arranged with the heating head 11 being interposed therebetween, without being fixed to the workpiece 17. The shield plates 68 can be easily mounted to the workpiece 17 by being placed from above over the workpiece 17 and can also be easily demounted.

The pair of shield plates 68 is respectively detachably supported to the cladding device 100A by a support member (not shown). An inner-diameter part of the circular arc part 68a of the shield plate is contacted to an outer peripheral surface of an upper part of the workpiece 17, thereby inhibiting the cooling fluid 63 from being introduced to the part 51 to be processed.

Also, the injection intensity of the cooling jacket 15 is adjusted so that the cooling fluid 63 is not to be introduced to the part 51 to be processed from the opened opening part 68b.

According to the cladding device 100A, it is possible to easily mount and demount the shield plate 68, so that it is possible to improve the operation efficiency.

Subsequently, a second embodiment of the cladding device is described. The cladding device of the second embodiment is configured to perform the cladding for a plate-shaped workpiece.

FIG. 7 is a pictorial configuration view of a cladding device of the second embodiment.

A cladding device 200 of the second embodiment includes a shield plate 71 provided as an annular wall configured to surround the part 51 to be processed of the plate-shaped workpiece 17. The shield plate 71 is detachably provided, and is preferably made of a material having high heat resistance and thermal insulation properties, like the above embodiment. Also, the cladding device 200 includes a workpiece moving mechanism 73 configured to relatively move the workpiece 17 and the heating head 11 along a plate surface of the workpiece 17, as the relative movement mechanism of the heating head 11 and the workpiece 17.

According to the cladding device 200, even when the part 51 to be processed exists at a part of the plate-shaped workpiece 17, it is possible to surround the part 51 to be processed by the shield plate 71. Thereby, the shield plate 71 can make it difficult for the cooling of the cooling jacket 15 to influence the part 51 to be processed. Therefore, it is possible to prevent the temperature rise of the temperature-rise suppressed part 65 without lowering the heat input to the part 51 to be processed. As a result, it is possible to accomplish both the cladding of an insufficient thickness part to be arranged on the same plane and the function guarantee of the workpiece 17.

In the meantime, the cooling jacket 15 may be configured to move relative to the workpiece 17 integrally with the heating head 11 or may be configured to move relative to the heating head integrally with the workpiece 17. Also, the cooling jacket 15 may be configured to relatively move, separately from the heating head 11 and the workpiece 17. Each is independently driven, so that the cooling range is widened and the cooling can be thus more securely performed.

Subsequently, a third embodiment of the cladding device is described. The cladding device of the third embodiment is configured to perform the processing with a part of the workpiece being immersed in the cooling fluid.

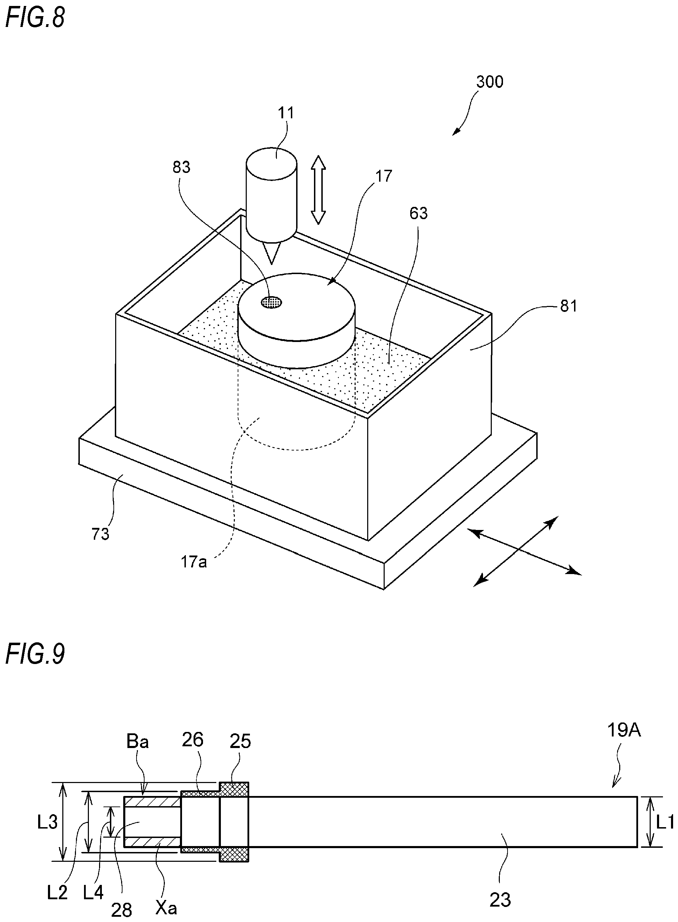

FIG. 8 is a pictorial configuration view of a cladding device of the third embodiment.

In a cladding device 300 of the third embodiment, a storage tank 81 of the cooling fluid 63 is fixed to the workpiece moving mechanism 73, which is similar to the second configuration example, and the heating head 11 is arranged to be vertically moveable above the storage tank 81. In the storage tank 81, the workpiece 17 is fixed by a workpiece support part (not shown), and a part of the workpiece 17 is immersed in the cooling fluid 63.

In the cladding device 300, a part 17a of the workpiece 17 for which it is intended to avoid the thermal influence is immersed in the cooling fluid 63 of the storage tank 81, and a desired processing point 83 of the workpiece 17 is exposed from the cooling fluid 63. Then, the fixing material is injected from the heating head 11 and the laser light is irradiated, so that the workpiece 17 is cladded.

According to the cladding device 300, it is possible to omit the respective mechanisms such as the nozzles configured to inject the cooling fluid 63 and the shield plate configured to prevent the scattering of the cooling fluid. Furthermore, it is possible to increase a contact area with the cooling medium simply by immersing the workpiece 17 in the cooling fluid 63, irrespective of the shape of the workpiece. Therefore, it is possible to simply and securely suppress the temperature rise of a part of the workpiece 17 to which the heat input is not permitted.

According to the cladding devices 100, 100A, 200, 300, the temperature rise associated with the cladding on the part to be processed is limited to the part to be processed, so that it is possible to suppress the heat from influencing the entire workpiece 17. Therefore, even for the workpiece 17 having a part at which the temperature rise should be avoided, it is possible to perform the cladding processing capable of preventing the heat input to the part on which the thermal influence is not permitted while satisfying the bond quality. As a result, it is possible to manufacture a metal component having a complex shape while keeping the strength and other mechanical properties of the workpiece 17.

For example, in the respective embodiments, the laser cladding processing in which the heating head includes the laser light source has been used. However, the present invention can be applied to processing, other than the laser cladding processing. For example, when the cooling jacket is made of a high heat-resistant material, the present invention can be applied to processing in which arc welding or gas welding is performed using the heating head, too. Also, the cladding device of each embodiment can be applied for a heat treatment, other than the cladding. That is, the cladding device can be used as a heat treatment device configured to perform heat treatment for only a part of the workpiece 17.

Subsequently, a fourth embodiment of a screw shaft and a manufacturing method thereof by the cladding processing is described.

FIG. 9 is a partial sectional view of a ball screw shaft 19A of the fourth embodiment. In the meantime, the ball screw shaft 19A of the fourth embodiment has the same outer shape as the ball screw shaft 19 of FIG. 2, and the same or equivalent parts as or to those of FIG. 2 are denoted with the same reference numerals and the descriptions thereof are omitted or simplified.

Like the ball screw shaft 19 shown in FIGS. 4A and 4B, the ball screw shaft 19A of the fourth embodiment has the bearing support part 26 and the flange part 25, which are diameter-expanded parts having outer diameter dimensions L2, L3 larger than an outer diameter dimension L1 of the ball screw part 23.

In the fourth embodiment, a material Ba of a predetermined outer diameter dimension having a machining allowance capable of processing the outer diameter dimension L1 of the ball screw part 23 is subjected to the cladding processing of the laser cladding by insufficient amounts of the outer diameter dimensions upon formation of the bearing support part 26 and the flange part 25, considering the processable machining allowance. The shaded portions of FIG. 9 indicate the cladding portions, and the outer diameter dimension of FIG. 9 is shown with the processable machining allowance being omitted. The predetermined outer diameter dimension of the material Ba is smaller than the outer diameter dimensions L2, L3 of the bearing support part 26 and the flange part 25.

When performing the cladding processing, the laser cladding processing is performed using the cladding device 100 of FIG. 1, as described above.

At the ball screw part 23, the expansion and contraction of the material Ba as a result of the thermal influence lowers lead accuracy, hardness of a ball rolling surface, and the like, so that the lifetime thereof may be reduced. For this reason, the heat input, which results from the processing, to the ball screw part 23 is not normally permitted. In the fourth embodiment, the temperature rise of at least the screw part, which is adjacent to the cladding part, of the ball screw part 23 or a part becoming the screw part can be suppressed to the allowed temperature or lower by the processing through the laser cladding in which the heat input is small and the cooling. For this reason, it is possible to accomplish both the cladding of the bearing support part 26 and the flange part 25 and the function of the ball screw shaft 19A.

In the meantime, as described above, when the influence of the temperature rise can be ignored, depending on required functions of a product, the cooling of the ball screw part 23 is not necessary.

Also, the processing of the ball rolling groove 23a (refer to FIG. 2) of the ball screw part 23 is performed after cladding the bearing support part 26 and the flange part 25.

Also, the extension part 28, which is located more closely to the shaft end than the bearing support part 26 and has a diameter smaller than the ball screw part 23, is formed by removing the unnecessary part 69.

Also, the cladding is performed using the laser cladding, so that it is possible to make the joining with a material different from the material Ba of the ball screw shaft 19A. Thereby, it is possible to configure surfaces of at least the bearing support part 26 and the flange part 25 by a material different from the material of the ball screw part 12. For example, as a material to be cladded, following different kinds of materials can be used with respect to the material Ba made of SCM (chromium/molybdenum) steel.

### <Titanium-based Alloy>

Since a titanium alloy such as 64 titanium has the specific strength higher than SUJ (high carbon chromium bearing steel), it is possible to make the flange part 25 small, so that it is possible to save the weight of the ball screw shaft 19A. Since the titanium alloy is an expensive material, it is used only for the necessary part, so that it is possible to provide the high-functional and inexpensive ball screw.

### <Nickel-based Alloy>

A nickel alloy such as Inconel, Hastelloy and the like is cladded, so that it is possible to improve the corrosion resistance of the flange part 25.

As described above, according to the manufacturing method of the ball screw shaft 19A of the fourth embodiment, the bearing support part 26 and the flange part 25 having the outer diameter dimensions larger than the outer diameter dimension of the ball screw part 23 are formed by the cladding on the material Ba having the predetermined outer diameter dimension through the laser cladding. Therefore, it is possible to provide the inexpensive ball screw shaft 19A of which yield of a material is favorable and processing time can be shortened.

Also, the cladding through the laser cladding is performed in a state where at least the screw part, which is adjacent to the cladding part, of the ball screw part 23 or a part becoming the screw part is cooled. Therefore, while securing the lead accuracy of the ball screw part 23 and the hardness of the ball rolling surface, it is possible to form the bearing support part 26 and the flange part 25 by the cladding.

Also, according to the ball screw shaft 19A of the fourth embodiment, the bearing support part 26 and the flange part 25 having the outer diameter dimensions larger than the outer diameter dimension of the ball screw part 23 are made of the material different from the material of the ball screw part 23. Therefore, it is possible to provide the ball screw shaft 19A having the bearing support part 26 and the flange part 25 having improved the high hardness, the corrosion resistance, the wear resistance and the like.

In the meantime, the diameter-expanded part larger than the outer diameter dimension of the ball screw part 23 may be at least one of the bearing support part 26 and the flange part 25 of the fourth embodiment and may be a part other than the ball screw part 23 of the ball screw shaft 19A.

Also, in the fourth embodiment, the laser cladding processing is performed so that the bearing support part 26 and the flange part 25 are configured by the different kinds of materials. However, for example, when the screw shaft is made of a low-priced material (iron-based material such as S45C), and a nickel-based alloy having high corrosion resistance is laser-cladded on the entire circumferential surface of the iron-based material configuring the ball screw shaft 19A, including the ball screw part 23, it is possible to manufacture the ball screw shaft 19A having high corrosion resistance at low cost.

Like this, the present invention is not limited to the above embodiments, and combinations of the respective configurations of the embodiments and changes and applications made by one skilled in the art on the basis of the specification and the well-known technology can also be conceived by the present invention and are included within the range to be protected.

In the respective embodiments, the ball screw shaft that is to be provided to the ball screw device has been exemplified. However, the present invention is not limited thereto. For example, the present invention can also be applied to a screw shaft, other than the ball screw. In this case, a screw device having the screw shaft can be configured to have the high quality at low cost.

Also, the screw shaft can be applied to a variety of machines such as an injection machine. The machine includes an instrument (of which power is fed manually). Also, the screw shaft can be applied to a vehicle component, particularly, an electric power steering device. As the electric power steering device, a rack assist-type device can be exemplified. According to the machine and vehicle to which the screw shaft is applied, it is possible to configure the high-quality machine and vehicle at low cost.

The subject application is based on Japanese Patent Application Nos. 2016-203292 filed on October 17, 2016 and 2016-203293 filed on October 17, 2016, the contents of which are incorporated herein by reference.

### Description of Reference Numerals

11: heating head
13: fixing material supply unit
15: cooling jacket
17: workpiece
19, 19A: ball screw shaft (screw shaft)
23: ball screw part (screw part)
25: flange part (diameter-expanded part)
26: bearing support part (diameter-expanded part)
51: part to be processed
55: fixing material
57: workpiece rotation driving mechanism (relative movement mechanism)
63: cooling fluid
65: temperature-rise suppressed part
67, 68, 71: shield plate
73: workpiece moving mechanism (relative movement mechanism)
100, 100A, 200, 300: cladding device

## Claims

1. A cladding device comprising:
a heating head which includes a heating source for heating a part to be processed of a workpiece and a fixing material and which is configured to cause the fixing material melted by the heating source to adhere to the part to be processed of the workpiece and to clad the workpiece,
wherein the cladding device is configured to bring a cooling fluid into contact with a temperature-rise suppressed part adjacent to the part to be processed of the workpiece.

2. The cladding device according to claim 1 comprising:
a cooling jacket configured to inject the cooling fluid toward the workpiece; and
a shield member which is provided at a boundary between the part to be processed and the temperature-rise suppressed part of the workpiece and which is configured to shield introduction of the cooling fluid from the temperature-rise suppressed part to the part to be processed.

3. The cladding device according to claim 1,
wherein the temperature-rise suppressed part of the workpiece is immersed in the cooling fluid.

4. The cladding device according to claim 2 comprising a relative movement mechanism configured to relatively move the workpiece and the heating head.

5. The cladding device according to claim 4,
wherein the relative movement mechanism includes a workpiece rotation driving mechanism configured to rotate the workpiece.

6. The cladding device according to claim 4,
wherein the relative movement mechanism is configured to relatively move the workpiece and the heating head by linear movement.

7. The cladding device according to any one of claims 1 to 6,
wherein the heating source is a laser illumination unit.

8. The cladding device according to claim 2,
wherein the shield member is capable of moving relative to the workpiece and includes an opening part which the workpiece is freely inserted in and removed from.

9. The cladding device according to claim 2,
wherein the shield member is an annular collar that is to be mounted to an outer periphery of the workpiece and protrudes in a radially outward direction of the workpiece.

10. The cladding device according to claim 4,
wherein the shield member is a wall configured to surround the part to be processed of the workpiece, and
wherein the relative movement mechanism includes a workpiece moving mechanism configured to relatively move the heating head and the part to be processed along the workpiece.

11. The cladding device according to claim 4,
wherein the shield member is an annular wall configured to surround the part to be processed of the plate-shaped workpiece, and
wherein the relative movement mechanism includes a workpiece moving mechanism configured to relatively move the heating head and the part to be processed along a plate surface of the workpiece.

12. A method of manufacturing a screw shaft having a diameter-expanded part larger than an outer diameter dimension of a ball screw part,
wherein the diameter-expanded part is formed by cladding.

13. The method of manufacturing the screw shaft according to claim 12,
wherein the diameter-expanded part is formed by laser cladding.

14. The method of manufacturing the screw shaft according to claim 13,
wherein the cladding by the laser cladding is performed in a state where at least a screw part adjacent to a cladding part or a part becoming the screw part is cooled.

15. The method of manufacturing the screw shaft according to any one of claims 12 to 14,
wherein the diameter-expanded part includes at least a flange part or a bearing support part.

16. A method of manufacturing a screw shaft having a screw part,
wherein the screw part is formed by cladding a nickel-based alloy around an iron-based material by laser cladding.

17. A manufacturing method of a machine comprising using the method of manufacturing the screw shaft according to any one of claims 12 to 16.

18. A manufacturing method of a vehicle comprising using the method of manufacturing the screw shaft according to any one of claims 12 to 16.

19. A screw shaft having a diameter-expanded part larger than an outer diameter dimension of a screw part,
wherein a surface of the diameter-expanded part is formed of a material different from a material of the screw part.

20. A screw shaft having a diameter-expanded part larger than an outer diameter dimension of a screw part,
wherein at least a surface of the diameter-expanded part which is cladded is formed of a material different from a material of the screw part.

21. The screw shaft according to claim 19 or 20,
wherein the diameter-expanded part includes at least a flange part or a bearing support part.

22. A screw device comprising the screw shaft according to claim 19 or 20.

23. A machine comprising the screw shaft according to any one of claims 19 to 21.

24. A vehicle comprising the screw shaft according to any one of claims 19 to 21.
